(19) Europäisches Patentamt

European Patent Office

Office européen des brevets

(11) **EP 2 684 661 B1**

## (12) EUROPEAN PATENT SPECIFICATION

(45) Date of publication and mention
of the grant of the patent:
**05.04.2017 Bulletin 2017/14**

(21) Application number: **12786304.1**

(22) Date of filing: **28.02.2012**

(51) Int Cl.:
*B60C 1/00* *(2006.01)*      *B29D 30/06* *(2006.01)*
*C08L 53/02* *(2006.01)*      *B60C 5/14* *(2006.01)*

(86) International application number:
**PCT/JP2012/054941**

(87) International publication number:
**WO 2012/157310 (22.11.2012 Gazette 2012/47)**

(54) **METHOD FOR PRODUCING PNEUMATIC TIRE**

VERFAHREN ZUR HERSTELLUNG EINES LUFTREIFENS

PROCÉDÉ PERMETTANT DE PRODUIRE UN PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.05.2011   JP 2011108481**

(43) Date of publication of application:
**15.01.2014   Bulletin 2014/03**

(73) Proprietor: **Sumitomo Rubber Industries, Ltd.
Kobe-shi, Hyogo 651-0072 (JP)**

(72) Inventors:
• **UESAKA, Kenichi
Kobe-shi
Hyogo 651-0072 (JP)**
• **SUGIMOTO, Mutsuki
Kobe-shi
Hyogo 651-0072 (JP)**

(74) Representative: **Manitz, Finsterwald & Partner
GbR
Martin-Greif-Strasse 1
80336 München (DE)**

(56) References cited:
**EP-A1- 1 987 962         EP-A1- 2 415 617
WO-A1-96/34736         WO-A1-2010/063427
WO-A1-2010/063427   JP-A- 11 240 108
JP-A- 2003 071 844      JP-A- 2005 066 861
JP-A- 2005 068 173      JP-A- 2005 068 173
JP-A- 2007 190 808      JP-A- 2009 018 445
JP-A- 2010 241 017      JP-A- 2010 527 839
JP-A- 2011 063 750      JP-A- 2012 040 862
JP-A- 2012 066 801      JP-A- 2012 131 031
US-A1- 2011 068 508**

**Description**

TECHNICAL FIELD

The present invention relates to a method for manufacturing a pneumatic tire, and particularly to a method for manufacturing a pneumatic tire in which a polymer layer stack is used for an inner liner.

BACKGROUND ART

In recent years, in response to strong social demands for low fuel consumption of vehicles, weight reduction of tires has been sought. Among tire members, weight reduction of an inner liner has also been requested. The inner liner is disposed in the radially inner side of a tire to reduce an amount of leakage of air from inside to outside the pneumatic tire.

Currently, a rubber composition for such an inner liner employs a butyl-based rubber. The butyl-based rubber contains a butyl rubber by 70 mass % to 100 mass % and a natural rubber by 30 mass % to 0 mass %. In this way, the tire is provided with improved air permeability resistance. In addition to butylene, the butyl-based rubber contains isoprene by approximately 1 mass %, which acts with sulfur, vulcanization accelerator, and zinc white to achieve co-crosslinking with adjacent rubber. In the case of normal blend, the above-described butyl-based rubber needs to have a thickness of 0.6 mm to 1.0 mm for a tire of a passenger car, and needs to have a thickness of approximately 1.0 mm to 2.0 mm for a tire of a truck/bus.

Meanwhile, in order to achieve weight reduction of the tire, use of a thermoplastic elastomer having higher air permeability resistance and capable of providing a thinner inner liner than the butyl-based rubber has been proposed. However, the thermoplastic elastomer having a smaller thickness and exhibiting higher air permeability resistance than the butyl-based rubber is inferior to the butyl-based rubber in terms of vulcanization adhesion strength with an insulation rubber or a carcass rubber adjacent to the inner liner. When the inner liner has low vulcanization adhesion strength, air enters between the inner liner and the insulation or the carcass, thus resulting in an "air-in phenomenon", in which multiple small air bubbles appear. This phenomenon is problematic because such small spots in the tire give a user an impression of bad appearance. In addition, during traveling, the air causes detachment of the inner liner and the insulation or the carcass to result in cracks in the inner liner. Accordingly, the tire internal pressure can be decreased, with the result that the tire may burst in the worst case.

Patent Document 1 (Japanese Patent Laying-Open No. 9-165469) proposes a pneumatic tire in which an inner liner layer is formed using nylon of low air permeability, so that adhesive property between the inner liner and a rubber composition forming the tire inside or a carcass layer can be improved. However, in the technique of Patent Document 1, to form a nylon film layer, a nylon film needs to be subjected to a RFL treatment, and then a rubber cement made of a rubber composition needs to be applied, which complicates the steps. Furthermore, a tire vulcanization method of inserting a bladder body into an unvulcanized tire seated in a mold and expanding the bladder body to press the bladder body against the inner surface of the mold from the inside of the unvulcanized tire for vulcanization molding is generally adopted in a vulcanizing step. However, as to the inner liner layer of Patent Document 1, the inner liner layer made of the nylon film layer will come into contact with the bladder in a heated state, so that the inner liner layer will stick and adhere to the bladder. Then, when taking out a vulcanized tire from the mold, the inner liner layer adhering to the bladder remains at the bladder side, with the result that the air-in phenomenon takes place between the inner liner layer and the insulation or the carcass.

EP 2 415 617 A1, which is a prior art document under Article 54 (3) EPC, discloses a polymer sheet for an inner liner composed of a first layer being composed of a polymer composition comprising a polymer component containing 5 to 40 % by mass of a styrene-isobutylene-styrene triblock copolymer, 60 % to 95 % by mass of a rubber component of at least one kind selected from the group consisting of natural rubber, isoprene rubber, butyl rubber and 0.1 to 5 parts by mass of sulfur with respect to 100 parts by mass of the polymer component and of a second layer being composed of a thermoplastic polymer and 0.1 to 5 parts by mass of sulfur with respect to 100 parts by mass of the thermoplastic polymer.

WO 2012/063427 A1 relates to the use of a multilayer laminate comprising at least two superimposed layers, namely a gastight first layer and an adhesive second layer, wherein the first gastight layer may comprise more than 50 % by weight of a copolymer containing polystyrene and polyisobutylene blocks, other elastomers, extender oil, platy filler and various other additives and wherein the second adhesive layer may comprises a thermoplastic elastomer.

CITATION LIST

PATENT DOCUMENT

PTD 1: Japanese Patent Laying-Open No. 9-165469

SUMMARY OF INVENTION

TECHNICAL PROBLEM

The present invention provides a method for manufacturing a pneumatic tire in which a polymer layer stack having small thickness and excellent air permeability resistance is used for an inner liner, wherein the inner liner and a bladder are prevented from sticking to each other to avoid bringing about an air-in phenomenon between the inner liner and a carcass.

SOLUTION TO PROBLEM

The present invention relates to a method for manufacturing a pneumatic tire, including the steps of preparing a polymer layer stack formed of a first layer consisting of a styrene-isobutylene-styrene triblock copolymer and having a thickness of 0.05 mm to 0.6 mm and a second layer consisting of an epoxidized styrene-butadiene-styrene triblock copolymer and having a thickness of 0.01 mm to 0.3 mm, molding a raw tire with the polymer layer stack bonded to an inner side of the tire as an inner liner, arranging the raw tire in a mold and vulcanizing the tire under pressure from a bladder, and cooling a vulcanized tire at 50°C to 120°C for 10 seconds to 300 seconds.

Preferably, the step of cooling a vulcanized tire is performed by cooling the inside of the bladder. Preferably, the step of cooling a vulcanized tire uses, as a coolant, one or more coolants selected from the group consisting of air, water vapor, water, and oil.

Preferably, the first layer of the polymer layer stack is arranged at the radially innermost side of the raw tire, and the second layer of the polymer layer stack is arranged in contact with a carcass layer of the raw tire.

Preferably, the styrene-isobutylene-styrene triblock copolymer used for the first layer has a weight average molecular weight of 50,000 to 400,000 and contains a styrene unit at a content of 10 mass % to 30 mass %. Preferably, the epoxidized styrene-butadiene-styrene triblock copolymer used for the second layer has a weight average molecular weight of 10,000 to 400,000, and contains a styrene unit at a content of 10 mass % to 30 mass % and an epoxy equivalent of 50 to 1000.

ADVANTAGEOUS EFFECTS OF INVENTION

Based on the present invention, a method for manufacturing a pneumatic tire in which a polymer layer stack having small thickness and excellent air permeability resistance is used for an inner liner, wherein the inner liner and a bladder are prevented from sticking to each other to avoid bringing about an air-in phenomenon between the inner liner and a carcass is provided.

BRIEF DESCRIPTION OF DRAWINGS

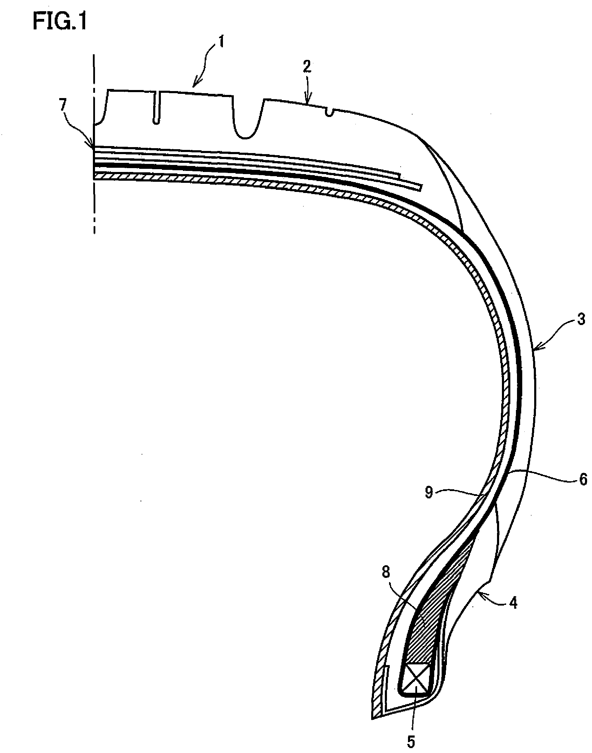

Fig. 1 is a schematic cross sectional view showing the right half of a pneumatic tire of the present invention.

DESCRIPTION OF EMBODIMENTS

<Pneumatic Tire>

The structure of a pneumatic tire manufactured using a method for manufacturing a pneumatic tire according to an embodiment of the present invention will be described with reference to Fig. 1.

A pneumatic tire 1 can be used for a passenger car, a track/bus, a heavy vehicle, or the like. Pneumatic tire 1 includes a tread portion 2, a sidewall portion 3, and bead portions 4. In each of bead portions 4, a bead core 5 is embedded. Further, a carcass 6 and a belt layer 7 are disposed. Carcass 6 is provided to extend from one bead portion 4 to the other bead portion, and is folded back at its opposite ends to engage bead cores 5. Belt layer 7, which is formed of two plies, is disposed outside a crown portion of carcass 6. An inner liner 9 is disposed inwardly relative to carcass 6 in the tire radial direction, so as to extend from one bead portion 4 to the other bead portion 4. Belt layer 7 is disposed such that two plies, which are formed of steel cords or cords of aramid fibers or the like, are arranged to allow the cords to cross each other between the plies normally at an angle of 5° to 30° relative to the tire circumferential direction. Further, in the carcass, organic fiber cords such as polyester, nylon, or aramid are arranged at substantially 90° relative to the tire circumferential direction. In a region surrounded by the carcass and each of its folded-back portions, a bead apex 8 is disposed to extend from the upper end of bead core 5 in the sidewall direction. It is noted that an insulation may be arranged between inner liner 9 and carcass 6.

<Method for Manufacturing Tire>

The method for manufacturing a pneumatic tire of the present invention includes the steps of (1) preparing a polymer layer stack, (2) molding a raw tire with the polymer layer stack bonded to an inner side of the tire as an inner liner, (3) arranging the raw tire in a mold and vulcanizing the tire under pressure from a bladder, and (4) cooling a vulcanized tire at 50°C to 120°C for 10 seconds to 300 seconds.
Each step in the manufacturing method of the present invention will be described.

(1) Step of Preparing Polymer Layer Stack

The polymer layer stack is formed of a first layer made of a styrene-isobutylene-styrene triblock copolymer and a second layer made of an epoxidized styrene-butadiene-styrene triblock copolymer.
The styrene-isobutylene-styrene triblock copolymer (hereinafter, also referred to as "SIBS") used for the first layer contains an isobutylene block in a molecular chain. Therefore, a polymer film made of the SIBS has excellent air permeability resistance. Further, the molecular structure of the SIBS is completely saturated except aromatic side chain, so that the SIBS is restrained from being deteriorated and hardened, and therefore has excellent durability.
Since the polymer film made of the SIBS has excellent air permeability resistance, an amount of blending a halogenated rubber having a high specific gravity, which has been used conventionally, can be reduced.
As to the molecular weight of the SIBS, the SIBS preferably has a weight average molecular weight of 50,000 to 400,000 measured through GPC measurement, in view of flowability, shaping step, rubber elasticity, and the like. If the weight average molecular weight thereof is less than 50,000, tensile strength and tensile elongation may be unfavorably decreased. If the weight average molecular weight thereof exceeds 400,000, extrusion workability may unfavorably become bad.
The SIBS generally contains a styrene unit by 10 mass % to 40 mass %. For better air permeability resistance and durability, the SIBS preferably contains the styrene unit at a content of 10 mass % to 30 mass %.
The SIBS preferably has a molar ratio between the isobutylene unit and the styrene unit (isobutylene unit/styrene unit) of 40/60 to 95/5 in terms of rubber elasticity of the copolymer. It is preferable that in the SIBS, the isobutylene block has a degree of polymerization in a range of approximately 10,000 to 150,000 and the styrene block has a degree of polymerization in a range of approximately 5,000 to 30,000 in view of rubber elasticity and workability.
The SIBS can be obtained through a general polymerization method for a vinyl-based compound, such as the living cationic polymerization method (see Japanese Patent Laying-Open No. 62-48704).
The SIBS does not have a double bond other than double bond of an aromatic side chain in the molecule. Hence, the SIBS is stable to ultraviolet rays as compared with a polymer having a double bond in the molecule, such as polybutadiene. Accordingly, the SIBS is excellent in weather resistance.
The first layer has a thickness of 0.05 mm to 0.6 mm. If the thickness of the first layer is less than 0.05 mm, the first layer may be broken due to pressing pressure when vulcanizing the raw tire in which the polymer layer stack is applied to the inner liner, with the result that an air leakage phenomenon may take place in the resulting tire. On the other hand, if the thickness of the first layer exceeds 0.6 mm, the weight of the tire is increased to result in decreased performance in fuel efficiency. Further, the first layer preferably has a thickness of 0.05 mm to 0.4 mm.
The first layer can be formed by forming the SIBS into the form of a film by means of a general method for forming a thermoplastic resin or a thermoplastic elastomer into a film, such as extrusion molding or calender molding.
The epoxidized SBS used for the second layer is a thermoplastic elastomer including a polystyrene block as a hard segment and a butadiene block as a soft segment, an unsaturated double bond portion included in the butadiene block having been epoxidized. In the present specification, an "epoxidized SBS layer" means a polymer sheet made of the epoxidized SBS.
The epoxidized SBS has the styrene block, and thus has excellent melting adhesive property with the SIBS similarly having a styrene block. Therefore, when vulcanizing the SIBS layer and the epoxidized SBS layer arranged adjacent to each other, a polymer layer stack with the SIBS layer and the epoxidized SBS layer adhering to each other in an excellent manner can be obtained.
The epoxidized SBS has the soft segment formed of the butadiene block, and is thus likely to adhere to a rubber component through vulcanization. Therefore, when vulcanizing the epoxidized SBS layer arranged adjacent to a rubber layer forming a carcass or an insulation, for example, the epoxidized SBS layer and the rubber layer can adhere to each other in an excellent manner. Therefore, if the polymer layer stack containing the epoxidized SBS layer is used for the inner liner, adhesive property between the polymer layer stack and the adjacent rubber layer can be improved.

The molecular weight of the epoxidized SBS is not particularly limited, but preferably has a weight average molecular weight of 10,000 to 400,000 measured through GPC method, in view of rubber elasticity and moldability. If the weight average molecular weight is less than 10,000, the epoxidized SBS may be too soft and unstable in size. If the weight average molecular weight exceeds 400,000, the epoxidized SBS may be too hard to extrude thin.

The epoxidized SBS preferably contains the styrene unit at a content of not less than or equal to 10 mass % and not more than or equal to 30 mass % in view of tackiness, adhesive property and rubber elasticity.

The epoxidized SBS preferably has a molar ratio between the butadiene unit and the styrene unit (butadiene unit/ styrene unit) of 90/10 to 70/30. It is preferable that in the epoxidized SBS, the butadiene block has a degree of polymerization in a range of approximately 500 to 5,000 and the styrene block has a degree of polymerization in a range of approximately 50 to 1,500 in view of rubber elasticity and handling. The epoxidized SBS preferably has an epoxy equivalent of more than or equal to 50 and less than or equal to 1,000 in view of adhesive property.

The second layer has a thickness of more than or equal to 0.01 mm and less than or equal to 0.3 mm. If the thickness of the epoxidized SBS layer used as the second layer is less than 0.01 mm, the epoxidized SBS layer may be broken due to pressing pressure when vulcanizing the raw tire in which the polymer layer stack containing the epoxidized SBS layer is applied to the inner liner, with the result that vulcanization adhesion strength between the SIBS layer and the adjacent rubber layer may be decreased. On the other hand, if the thickness of the epoxidized SBS layer exceeds 0.3 mm, the weight of the tire is increased to possibly result in decreased performance in fuel efficiency. The epoxidized SBS layer preferably has a thickness of more than or equal to 0.05 mm and less than or equal to 0.2 mm. The epoxidized SBS layer can be obtained by means of a general method for forming a thermoplastic elastomer into a sheet, such as extrusion molding or calender molding.

The polymer layer stack for an inner liner can be manufactured by the following method, for example. The SIBS or the epoxidized SBS is formed into a sheet by extrusion molding or calender molding to produce an SIBS layer and an epoxidized SBS layer. The SIBS layer and the epoxidized SBS layer are bonded together to produce a polymer layer stack. Alternatively, a polymer layer stack can also be produced by subjecting each pellet of the SIBS and the epoxidized SBS to lamination extrusion, such as laminate extrusion or coextrusion.

(2) Step of Preparing Raw Tire

In an embodiment of the present invention, the polymer layer stack is disposed at an inner liner portion of a raw tire. When disposing the polymer layer stack in the raw tire, the polymer layer stack is arranged toward the outer side in the tire radial direction such that the second layer of the polymer layer stack comes into contact with carcass 6. With such arrangement, the second layer and carcass 6 can adhere to each other through vulcanization in the tire vulcanizing step. Therefore, in resulting pneumatic tire 1, inner liner 9 and the rubber layer of carcass 6 adhere to each other in an excellent manner. Thus, the pneumatic tire can have excellent air permeability resistance and durability.

Moreover, when an insulation is arranged between inner liner 9 and carcass 6 adhesive strength between inner liner 9 and the insulation can also be improved by arranging the polymer layer stack toward the outer side in the tire radial direction such that the second layer of the polymer layer stack comes into contact with the insulation.

(3) Step of Vulcanizing Tire

Next, the resulting raw tire is fitted in a mold and vulcanized under pressure from a bladder. The bladder is seated in the vulcanization mold. In the step of vulcanizing a tire, the raw tire is input into the mold which is open. When the raw tire is input into and arranged in the mold, the bladder is located inside the raw tire and has a contracted state. Filling gas causes the bladder to expand. Through this expansion, the raw tire is pressed from the inside toward the mold to be deformed. This deformation is called shaping.

Next, the mold is closed, and the internal pressure of the bladder is increased. The raw tire is held between a cavity surface of the mold and the outer surface of the bladder and pressurized. Furthermore, the raw tire is heated by heat conduction from the mold and the bladder. Through pressurization and heating, a rubber composition of the raw tire is brought into a flow state, and air in the mold is moved to be discharged from the mold. Through heating, rubber produces a vulcanization reaction, with the result that a vulcanized tire is obtained. Vulcanization is conducted, for example, at a temperature of 150°C to 180°C for 3 minutes to 50 minutes.

(4) Step of Cooling Vulcanized Tire

Next, in the present invention, the vulcanized tire is cooled at a temperature of 50°C to 120°C for 10 seconds to 300 seconds. In the pneumatic tire of the present invention, a polymer layer stack formed of the SIBS layer as the first layer and the epoxidized SBS layer as the second layer is used for the inner liner. Each of the SIBS and the epoxidized SBS constituting the polymer layer stack is a thermoplastic elastomer. Therefore, when heated to, for example, 150°C to 180°C in the step of obtaining a vulcanized tire, they will be softened or brought into a flow state within the mold. The thermoplastic elastomer having been softened or brought into a flow state is likely to be fused with an adjacent component. That is, the inner liner in contact with the outer surface of the expanded bladder will be softened or brought into a flow state by heating, to be fused with the bladder.

When an attempt is made to remove the vulcanized tire from the mold with the inner liner fused with the outer surface of the bladder, the inner liner peels off the insulation or the carcass adjacent thereto, causing an air-in phenomenon. Further, the tire itself may be deformed in shape.

In the present invention, after the tire is vulcanized, immediate quenching is conducted at 120°C or lower for 10 or more seconds without opening the mold so that the bladder is maintained at a high internal pressure. The thermoplastic elastomer used for the inner liner can thereby be solidified. When the thermoplastic elastomer is solidified, fusing of the inner liner with the bladder is eliminated, and thus the releasability when removing the vulcanized tire from the mold is improved.

The cooling temperature is from 50°C to 120°C. If the cooling temperature is lower than 50°C, it is necessary to prepare a particular coolant, which may degrade productivity. If the cooling temperature exceeds 120°C, the thermoplastic elastomer may not be sufficiently cooled, which causes the inner liner to remain fused with the bladder when the mold is opened, giving rise to an air-in phenomenon. In view of solidifying the thermoplastic elastomer at its softening point or below, the cooling temperature is preferably from 70°C to 100°C.

The cooling time is from 10 seconds to 300 seconds. If the cooling time is shorter than 10 seconds, the thermoplastic elastomer may not be sufficiently cooled, which causes the inner liner to remain fused with the bladder when the mold is opened, giving rise to an air-in phenomenon. If the cooling time exceeds 300 seconds, productivity is degraded. In view of compatibility between softening of the thermoplastic elastomer and productivity, the cooling time is preferably from 30 seconds to 180 seconds.

The step of cooling a vulcanized tire is preferably performed by cooling inside the bladder. Since a cavity exists inside the bladder, it is possible to introduce a coolant adjusted to the cooling temperature into the bladder after completion of the vulcanizing step. Alternatively, the step of cooling a vulcanized tire can be performed by providing a cooling structure in the mold in addition to cooling inside the bladder.

It is preferable to use, as a coolant for use in the cooling step, one or more coolants selected from the group consisting of air, water vapor, water, and oil. Of these, water having excellent cooling efficiency is preferably used.

[Examples]

The present invention will be described below based on Examples.

Examples 1 to 8, Comparative Examples 1 to 5

<Step of Preparing Polymer Layer Stack>

As the SIBS, "SIBSTAR 102T" (a styrene-isobutylene-styrene triblock copolymer; weight average molecular weight: 100,000, the content of the styrene unit: 25 mass %; Shore A hardness: 25) provided by Kaneka Corporation was prepared.

As the epoxidized SBS, "Epofriend A1020" (an epoxidized styrene-butadiene-styrene triblock copolymer; weight average molecular weight: 100,000; epoxy equivalent: 500) provided by Daicel Chemical Industries Ltd was prepared.

The above-described SIBS and the epoxidized SBS were pelletized using a biaxial extruder (screw diameter: $\phi$50 mm; L/D: 30; cylinder temperature: 220°C). The obtained pellets were subjected to coextrusion using a T-die extruder (screw diameter: $\phi$80 mm; L/D: 50; die grip width: 500 mm; cylinder temperature: 220°C) to obtain the first and second layers. A polymer layer stack having the thickness shown in Table 2 was produced.

It is noted that, in Comparative Example 1, 90 parts by mass of chlorobutyl ("Exxon Chlorobutyl 1068" manufactured by Exxon Mobil Corporation), 10 parts by mass of a natural rubber (NR, TSR20) and 50 parts by mass of a filler ("SEAST V" (N660, nitrogen-adsorption specific surface area: 27 $m^2$/g) manufactured by Tokai Carbon Co., Ltd.) were mixed by a Banbury mixer and then formed into a sheet by a calender roll to obtain a polymer film having a thickness of 1.0 mm (indicated as IIR/NR/filler layer in Table 2).

<Step of Molding Raw Tire>

The resulting polymer layer stack was applied to the inner liner portion of the tire to prepare a raw tire. It is noted that the polymer layer stack is arranged such that the SIBS layer as the first layer of the polymer layer stack is disposed at the radially innermost side of the raw tire and the epoxidized SBS layer as the second layer comes into contact with the carcass layer of the raw tire.

<Step of Vulcanizing Tire>

The raw tire was arranged in the mold and subjected to press molding at 170°C for 20 minutes to manufacture a vulcanized tire of size of 195/65R15.

<Step of Cooling Tire>

After cooling the vulcanized tire in the mold at 100°C for 3 minutes, the vulcanized tire was removed from the mold. Thereafter, water having a water temperature adjusted to the cooling temperature shown in Table 2 was introduced into the bladder to cool the vulcanized tire. After the lapse of the cooling time shown in Table 2, the vulcanized tire was removed from the mold.

<Performance Evaluation>

The following evaluations were made on each resulting pneumatic tire.

<Tire Productivity>

Tire productivity means manufacturing efficiency based on the number of tires produced per hour, and evaluations were made on the following criteria.

A: a level equivalent to typical productivity
B: inferior to typical productivity but with a production efficiency drop within 5%
C: inferior to typical productivity and with a production efficiency drop exceeding 5%

<Presence or Absence of Air-In Portions>

The inside of the tire after vulcanizing and cooling steps was checked and evaluated on the following criteria.

A: In appearance, per tire, the number of air-in portions with a diameter of 5 mm or less and the number of air-in portions with a diameter exceeding 5 mm were both 0.
B: In appearance, per tire, the number of air-in portions with a diameter of 5 mm or less was one to three, and the number of air-in portions with a diameter exceeding 5 mm was 0.
C: In appearance, per tire, the number of air-in portions with a diameter of 5 mm or less was four or more, and the number of air-in portions with a diameter exceeding 5 mm was 1 or more.

<Flection Crack Growth>

In a tire endurance traveling test, evaluation was made depending on whether the inner liner was cracked or detached. Each manufactured pneumatic tire of size of 195/65R15 was assembled to a JIS specification rim 15 × 6JJ. The tire internal pressure was set at 150 KPa, which was lower internal pressure than normal internal pressure. The load was set at 600 kg. The speed was set at 100 km/h. The travel distance was set at 20,000 km. Inside of the tire was observed to measure the number of cracks/detachments. With Comparative Example 1 being regarded as a reference (100), flection crack growth in Example 1, for example, was expressed in an index by the following expression. As the value is larger, the flection crack growth resistance is more excellent. The same applies to Examples 2 to 8 and Comparative Examples 2 to 5.

$$(\text{Flection Crack Growth Index}) = (\text{the Number of Cracks/Detachments in}$$

$$\text{Comparative Example 1}) / (\text{the Number of Cracks/Detachments in Example 1}) \times 100$$

<Rolling Resistance>

Each manufactured pneumatic tire of size of 195/65R15 was assembled to a JIS specification rim 15 × 6JJ, and a rolling resistance tester provided by Kobe Steel Ltd was used to measure rolling resistance thereof while performing traveling at a room temperature (38°C) under conditions of a load of 3.4 kN, an air pressure of 230 kPa, and a speed of 80 km/h. With Comparative Example 1 being regarded as a reference (100), rolling resistance of Example 1, for example, was expressed in an index by the following expression. As the value is larger, the rolling resistance is further reduced. The same applies to Examples 2 to 8 and Comparative Examples 2 to 5.

$$\text{(Rolling Resistance Index)} = \text{(Rolling Resistance of Comparative Example 1)} \,/$$

$$\text{(Rolling Resistance of Example 1)} \times 100$$

<Static Air Pressure Decreasing Ratio>

Each manufactured pneumatic tire of size of 195/65R15 was assembled to a JIS specification rim $15 \times 6JJ$, and air was introduced thereinto at an initial air pressure of 300 Kpa. Then, the tire was left for 90 days at a room temperature. Then, decreasing ratio of air pressure was calculated.

<Overall Judgment>

Criteria for overall judgment are as shown in Table 1.

[Table 1]

| Overall judgment | Judgment criteria | (a) Tire productivity | (b) Presence or absence of air-in portions | (c) Flection crack growth Index | (d) Rolling resistance Index | (e) Static air pressure decreasing ratio (%/month) |
|---|---|---|---|---|---|---|
| A | All of (a) to (e) satisfy conditions on the right. | A | A | 100<(c) | 100<(d) | (e)≤2.5 |
| B | Any one of (a) to (e) satisfies a corresponding condition on the right. When plural judgments apply, a lower evaluation is adopted. | B | B | 80<(c)≤100 | 80<(d)≦100 | 2.5<(e)≤4.0 |
| C | Any one of (a) to (e) satisfies a corresponding condition on the right. When plural judgments apply, a lower evaluation is adopted. | C | C | (c)≤80 | (d)≤80 | 4.0<(e) |

The test results are shown in Table 2.

[Table 2]

| | | Examples | | | | | | | | Comparative Examples | | | | |
|---|---|---|---|---|---|---|---|---|---|---|---|---|---|---|
| | | 1 | 2 | 3 | 4 | 5 | 6 | 7 | 8 | 1 | 2 | 3 | 4 | 5 |
| Polymer layer stack structure | IIR/NR/filler layer (mm) | - | - | - | - | - | - | - | - | 1.00 | - | - | - | - |
| | First layer (SIBS layer) (mm) | 0.59 | 0.59 | 0.30 | 0.30 | 0.50 | 0.50 | 0.05 | 0.05 | - | 0.60 | 0.60 | 0.04 | 0.59 |
| | Second layer (epoxidized SBS layer) (mm) | 0.01 | 0.01 | 0.3 | 0.3 | 0.01 | 0.01 | 0.01 | 0.01 | - | - | - | 0.05 | 0.01 |
| Vulcanizing step | Vulcanizing temperature (°C) | 170 | 170 | 170 | 170 | 170 | 170 | 170 | 170 | 170 | 170 | 170 | 170 | 170 |
| | Vulcanizing time (min) | 20 | 20 | 20 | 20 | 20 | 20 | 20 | 20 | 20 | 20 | 20 | 20 | 20 |
| Cooling step | Cooling temperature (°C) | 50 | 120 | 50 | 120 | 50 | 120 | 50 | 120 | None | None | 40 | 120 | 130 |
| | Cooling time (sec) | 10 | 300 | 10 | 300 | 10 | 300 | 10 | 300 | None | None | 9 | 300 | 350 |
| Evaluation | Tire productivity | A | A | A | A | A | A | A | A | A | C | B | B | C |
| | Tire test — Presence or absence of air-in portions | A | A | A | A | A | A | A | A | A | C | - | B | C |
| | Tire test — Flection crack growth index | 136 | 150 | 148 | 163 | 139 | 154 | 202 | 224 | 100 | 50 | - | 83 | 81 |
| | Tire test — Rolling resistance index | 105 | 105 | 108 | 108 | 106 | 106 | 110 | 110 | 100 | 98 | - | 97 | 96 |
| | Tire test — Static air pressure decreasing ratio | 1.8 | 1.9 | 2.3 | 2.4 | 1.9 | 2.0 | 2.4 | 2.5 | 4 | 2.7 | - | 4 | 3.9 |
| | Overall judgment | A | A | A | A | A | A | A | A | B | C | C | C | C |

Each of combinations of Examples 1 and 2, Examples 3 and 4, Examples 5 and 6, and Examples 7 and 8 is a combination in the case where the cooling time was set at 10 seconds and 300 seconds, respectively. Examples are shown in which four combinations were implemented varying the thicknesses of the first and second layers of the polymer layer stack.

Comparative Example 1 is an example where chlorobutyl was used for the inner liner. Comparative Examples 2 and 3 are examples where the inner liner is formed only of the first layer. Comparative Example 4 is the case where the first layer of the polymer layer stack has a small thickness of 0.04 mm. Comparative Example 5 is the case where the cooling temperature for the tire was as high as 130°C.

Examples of the present invention are excellent overall in tire productivity, presence or absence of air-in portions, flection crack growth resistance, rolling resistance, and static air pressure decreasing ratio, as compared with Comparative Examples 1 to 5.

REFERENCE SIGNS LIST

1 pneumatic tire; 2 tread portion; 3 sidewall portion; 4 bead portion; 5 bead core; 6 carcass; 7 belt layer; 8 bead apex; 9 inner liner.

## Claims

1.   A method for manufacturing a pneumatic tire (1), comprising the steps of:

preparing a polymer layer stack formed of a first layer consisting of a styrene-isobutylene-styrene triblock copolymer and having a thickness of 0.05 mm to 0.6 mm and a second layer consisting of an epoxidized styrene-butadiene-styrene triblock copolymer and having a thickness of 0.01 mm to 0.3 mm;
molding a raw tire with said polymer layer stack bonded to an inner side of the tire as an inner liner (9);
arranging said raw tire in a mold and vulcanizing the tire under pressure from a bladder; and
cooling a vulcanized tire at 50°C to 120°C for 10 seconds to 300 seconds.

2.   The method for manufacturing a pneumatic tire (1) according to claim 1, wherein said step of cooling a vulcanized tire is performed by cooling the inside of the bladder.

3.   The method for manufacturing a pneumatic tire (1) according to claim 1, wherein said step of cooling a vulcanized tire uses, as a coolant, one or more coolants selected from the group consisting of air, water vapor, water, and oil.

4.   The method for manufacturing a pneumatic tire (1) according to claim 1, wherein the first layer of said polymer layer stack is arranged at the radially innermost side of said raw tire.

5.   The method for manufacturing of a pneumatic tire (1) according to claim 1, wherein the second layer of said polymer layer stack is arranged in contact with a carcass layer of said raw tire.

6.   The method for manufacturing of a pneumatic tire (1) according to claim 1, wherein said styrene-isobutylene-styrene triblock copolymer has a weight average molecular weight of 50,000 to 400,000 and contains a styrene unit at a content of 10 mass % to 30 mass %.

7.   The method for manufacturing of a pneumatic tire (1) according to claim 1, wherein the epoxidized styrene-butadiene-styrene triblock copolymer has a weight average molecular weight of 10,000 to 400,000, contains a styrene unit at a content of 10 mass % to 30 mass %, and has an epoxy equivalent of 50 to 1,000.

## Patentansprüche

1.   Verfahren zum Herstellen eines Luftreifens (1), umfassend die Schritte:

Herstellen eines Polymerschichtstapels, der aus einer ersten Schicht, die aus Styrol-Isobutylen-Styrol-Triblockcoplymer besteht und eine Dicke von 0,05 mm bis 0,6 mm aufweist, und einer zweiten Schicht, die aus epoxidiertem Styrol-Butadien-Styrol-Triblockcopolymer besteht und eine Dicke von 0,01 mm bis 0,3 mm aufweist, gebildet wird;

Formen eines Rohreifens mit dem mit einer Innenseite des Reifens als einen Innerliner (9) verbundenen Polymerschichtstapel;

Anordnen des Rohreifens in einer Form und Vulkanisieren des Reifens unter Druck von einem Heizbalg; und

Kühlen eines vulkanisierten Reifens bei 50°C bis 120°C für 10 Sekunden bis 300 Sekunden.

2. Verfahren zum Herstellen eines Luftreifens (1) nach Anspruch 1, wobei der Schritt des Kühlens eines vulkanisierten Reifens durch Kühlen des Inneren des Heizbalges durchgeführt wird.

3. Verfahren zum Herstellen eines Luftreifens (1) nach Anspruch 1, wobei der Schritt des Kühlens eines vulkanisierten Reifens als ein Kühlmittel eines oder mehrerer Kühlmittel ausgewählt aus der Gruppe bestehend aus Luft, Wasserdampf, Wasser und ÖI verwendet.

4. Verfahren zum Herstellen eines Luftreifens (1) nach Anspruch 1, wobei die erste Schicht des Polymerschichtstapels an der radial innersten Seite des Rohreifens angeordnet wird.

5. Verfahren zum Herstellen eines Luftreifens (1) nach Anspruch 1, wobei die zweite Schicht des Polymerschichtstapels in Kontakt mit einer Karkasslage des Rohreifens angeordnet wird.

6. Verfahren zum Herstellen eines Luftreifens (1) nach Anspruch 1, wobei das Styrol-Isobutylen-Styrol-Triblockcopolymer ein gewichtsgemitteltes Molekulargewicht von 50.000 bis 400.000 aufweist und eine Styroleinheit mit einem Gehalt von 10 Masse-% bis 30 Masse-% enthält.

7. Verfahren zum Herstellen eines Luftreifens (1) nach Anspruch 1, wobei das epoxidierte Styrol-Butadien-Styrol-Triblockcopolymer ein gewichtsgemitteltes Molekulargewicht von 10.000 bis 400.000 aufweist, eine Styroleinheit mit einem Gehalt von 10 Masse-% bis 30 Masse-% enthält und ein Epoxidäquivalent von 50 bis 1000 aufweist.

**Revendications**

1. Procédé pour fabriquer un bandage pneumatique (1) comprenant les étapes consistant à :

préparer un empilement de couches de polymère formées d'une première couche constituée d'un copolymère tribloc styrène-isobutylène-styrène et ayant une épaisseur de 0,05 mm à 0,6 mm et une seconde couche constituée d'un copolymère tribloc styrène-butadiène-styrène époxydé et ayant une épaisseur de 0,01 mm à 0,3 mm ;

mouler un pneumatique brut avec ledit empilement de couches de polymère sur un côté intérieur du pneumatique à titre de doublage intérieur (9) ;

agencer ledit pneumatique brut dans un moule et vulcaniser le pneumatique sous pression depuis une poche ; et

refroidir le pneumatique vulcanisé à 50° C à 100° C pendant 10 s à 300 s.

2. Procédé pour fabriquer un bandage pneumatique (1) selon la revendication 1, dans lequel ladite étape de refroidissement du pneumatique vulcanisé est exécutée en refroidissant l'intérieur de la poche.

3. Procédé pour fabriquer un bandage pneumatique (1) selon la revendication 1, dans lequel ladite étape de refroidissement du pneumatique vulcanisé utilise à titre de produit de refroidissement un ou plusieurs produits de refroidissement sélectionnés parmi le groupe constitué d'air, vapeur d'eau, eau, et huile.

4. Procédé pour fabriquer un bandage pneumatique (1) selon la revendication 1, dans lequel la première couche dudit empilement de couches de polymère est agencée sur le côté radialement le plus intérieur dudit pneumatique brut.

5. Procédé pour fabriquer un bandage pneumatique (1) selon la revendication 1, dans lequel la seconde couche dudit empilement de couches de polymère est agencée en contact avec une couche de carcasse dudit pneumatique brut.

6. Procédé pour fabriquer un bandage pneumatique (1) selon la revendication 1, dans lequel ledit copolymère tribloc styrène-isobutylène-styrène a un poids moléculaire moyen de 50 000 à 400 000 et contient une unité styrène dans une teneur de 10 % en masse à 30 % en masse.

7. Procédé pour fabriquer un bandage pneumatique (1) selon la revendication 1, dans lequel le copolymère tribloc styrène-butadiène-styrène époxydé a un poids moléculaire moyen de 10 000 à 400 000 et contient une unité styrène dans une teneur de 10 % en masse à 30 % en masse, et présente un équivalent époxy de 50 à 1000.

FIG.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9165469 A
- EP 2415617 A1
- WO 2012063427 A1
- JP 62048704 A